# EUROPÄISCHE PATENTSCHRIFT

(11) **EP 0 569 686 B1**
(45) Veröffentlichungstag und Bekanntmachung des Hinweises auf die Patenterteilung: **04.06.1997**
(21) Anmeldenummer: 93104132.1
(22) Anmeldetag: 13.03.1993
(51) Int. Cl.: G01S 17/02, G08B 13/187

(54) **Einen Sender, einen Empfänger und eine Schaltungsanordnung zur Signalauswertung aufweisende lichtelektrische Überwachungseinrichtung**
Surveillance apparatus comprising transmitter, receiver and signal processing circuit
Dispositif de surveillance comportant un émetteur, un récepteur et un circuit d'analyse de signal

(30) Priorität: 09.05.1992 DE 4215272
(43) Veröffentlichungstag der Anmeldung: 18.11.1993
(73) Patentinhaber: Leuze electronic GmbH + Co., D-73277 Owen (DE)
(72) Erfinder: Argast, Martin, Dipl.-Ing. (FH), W-7435 Hülben (DE)

(56) Entgegenhaltungen:
- EP-A- 0 520 247
- DE-A- 3 236 360
- DE-A- 3 330 872
- DE-A- 3 804 073
- DE-A- 4 102 152
- DE-B- 2 403 052
- FR-A- 2 225 064

## Beschreibung

Die Erfindung betrifft eine Überwachungseinrichtung gemäß dem Oberbegriff des Anspruchs 1.

Eine derartige Überwachungseinrichtung ist aus der DE-O-32 36 360 bekannt.

Diese Überwachungseinrichtung weist einen Laserlicht emittierenden Sender und einen Empfänger auf. Vorteilhafterweise ist das Laserlicht amplitudenmoduliert. Die Überwachungseinrichtung arbeitet nach dem Phasenmeßprinzip und ermittelt die Distanz von Objekten zur Überwachungseinrichung innerhalb eines Überwachungsbreiches. Befindet sich kein Eindringling im Überwachungsbereich, so wird ein Empfangssignal erhalten, welches sich hinsichtlich der Phasenlage nicht ändert. Dringt ein Eindringling in den Überwachungsbereich ein, so ändert sich die Phasenlage des Empfangssignals. Diese Phasenlage wird ausgewertet, wodurch das Eindringen in den Überwachungsbereich erfaßt wird, worauf gegebenenfalls eine Alammeldung folgt.

Der Erfindung liegt die Aufgabe zugrunde, die Nachweissicherheit einer Überwachungseinrichtung der eingangs genannten Art zu erhöhen.

Diese Aufgabe ist erfindungsgemäß mit den kennzeichnenden Merkmalen des Anspruchs 1 gelöst.

Die Erfindung wird im nachstehenden anhand der Zeichnung erläutert.
Es zeigen:

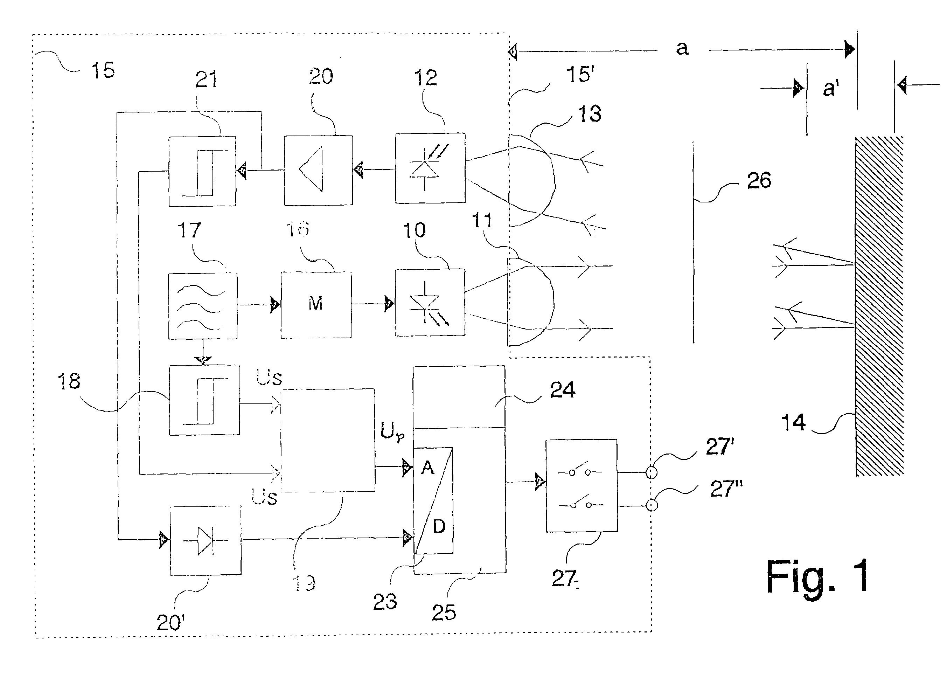

- Fig. 1: eine als Lichttaster ausgebildete Überwachungseinrichtung in Blockdarstellung mit untereinander angeordneter Sende- und Empfangsoptik,
- Fig. 2: die Sende- und Empfangsoptik in koaxialer Anordnung,
- Fig. 3: ein mittels Umlenkspiegel erzielter koaxialer Verlauf des Sende- und Empfangslichtbündels.

Die Überwachungseinrichtung enthält einen Lichtsender 10 in Form eines Lasers bzw. einer Laserdiode mit räumlich vorgeordneter Sendeoptik 11 sowie einen Lichtempfänger 12 mit diesem zugeordneter Empfangsoptik 13. Der Lichtsender 10 und der Lichtempfänger 12 mit den zugehörigen Optiken 11 und 13 sind hier räumlich über- bzw. nebeneinander angeordnet und korrespondieren mit einer Referenzfläche 14, die sich im Abstand a von einer durch die Sendeoptik 11 und/oder die Empfangsoptik 13 gelegten gestrichelt gekennzeichneten Bezugsebene 15 (Gehäusefrontseite) befindet und der ein Toleranzbereich a' zugemessen ist.

Dem Lichtsender 10 ist ein Modulator 16 zugeordnet, der das Sendelicht in seiner Intensität moduliert und der von einem Oszillator 17 gespeist wird. Die Spannung des Oszillators 17 wird über einen Impulsformer 18 (Schmitt-Trigger) einem Phasendetektor 19 als getaktete Eingangsspannung Uₛ zugugeführt. Die von der Referenzfläche 14 reflektierte Strahlungsleistung generiert im Lichtempfanger 12 ein Wechselspannungssignal. Dieses Signal wird, gegebenenfalls nach Verstärkung in einem Verstärker 20, mittels eines weiteren Impulsformers 21 in Rechteckimpulse umgesetzt. Diese Impulse gelangen als Eingangsspannung Uₑ (Empfangssignal) an einen zweiten Eingang des Phasendetektors 19. Am Ausgang des Phasendetektors 19 steht eine phasenproportionale Spannung U_{φ} an, die einem Analog/Digitalwandler 23 als Eingangssignal zugeführt und im Datenspeicher 24 eines Mikrocontrollers 25 gespeichert wird.

Die Frequenz der dem Phasendetektor 19 über den Oszillator 17 und den Impulsformer 18 zugeführten rechteckförmigen Spannungsimpulse ist vorzugsweise kleiner gleich 10 MHz gewählt.

Für den erfindungsgemäßen Zweck eignet sich beispielsweise ein zwei D-Flip-Flops aufweisender frequenzempfindlicher Phasendetektor, wie er durch Tietze-Schenk, Springer-Verlag, Neunte Auflage, Seite 962 bekannt ist.

Der Sollwert der Zeitdifferenz zwischen den positiven Nulldurchgängen Uₛ und Uₑ bei freier Überwachungsstrecke (Phasenverschiebung) entspricht der Entfernung a der Referenzfläche 14 von der bzw. einer Bezugsebene 15', wobei die Toleranzstrecke a' mit einbezogen ist. Dieser Sollwert wird im Datenspeicher 24 (EEPROM) des Mikrocontrollers 25 gespeichert.

Desweiteren wird die am Ausgang des Verstärkers 20 anstehende Amplitude des bei freier Überwachungsstrecke infolge der von der Referenzfläche reflektierten Strahlung im Lichtempfänger 12 erzeugten Signals über einen Gleichrichter 20' dem A/D-Wandler 23 zugeführt und als Sollwert abgelegt, einschließlich eines Amplituden-Toleranzbereichs.

Die sich beim Eindringen eines Hindernisses 26 in die Uberwachungsstrecke a hinsichtlich einer Phasen- und Amplitudenveränderung ergebenden Istwerte weichen von den gespeicherten Sollwerten ab und führen zu einer Warnsignalabgabe am Ausgang 27' eines Relais 27. Bei freier Überwachungsstrecke a wird am Ausgang 27' des Relais 27 Signal "Uberwachungsstrecke bzw. Schutzfeld frei" ausgegeben. Die Relaiskontakte 27' und 27'' sind antivalent.

Durch die Messung der Lichtlaufzeit durch Phasenvergleich und die Doppelbewertung der Empfangssignale nach Phase und Amplitude sind in den Überwachungsbereich gelangende Objekte eindeutig erfaßbar, insbesondere auch solche, die nur eine geringe Entfernung von der Frontseite 15' des Gehäuses der Überwachungseinrichtung aufweisen. Die Überwachungseinrichtung ist in einem Gehäuse 15 untergebracht.

Durch Regelung der Lichtleistung des Lichtsenders 10 abhängig von der Amplitude des Sollempfangssignals ist eine selbsttätige Anpassung an unterschiedliche Reflexionsgrade der Referenzfläche erzielbar. Als Sollwert für eine solche Regelung dient ein im Datenspeicher des Microcontrollers gespeicherter Schwellenwert, bei dessen Unterschreitung eine Nachregelung der Lichtleistung erfolgt. Führt die Nachregelung zu keiner nennenswerten Verbesserung der Verhältnisse, z.B. wegen Verschmutzung der Optik, erfolgt abhängig von einer definierten Grenzleistung des Lichtsenders eine Warnsignalabgabe.

Im Falle unter- bzw. nebeneinander angeordneter Sende- und Empfangsoptik 11, 13 verlaufen Sende- und Empfangslichtstrahl um einen mehr oder weniger großen Winkel geneigt zueinander, wodurch im Nahbereich eine strahlungsfreie Zone entsteht, die ein Erfassen von in diesem Bereich befindlichen Objekten ausschließt.

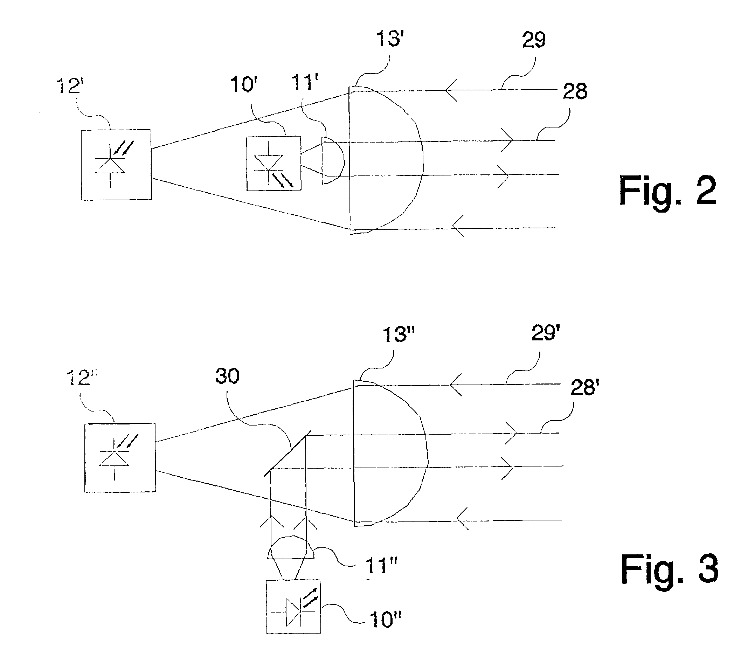

Um diesen Nachteil zu vermeiden, können, wie Figur 2 schematisch veranschaulicht, Sende- und Empfangsoptik 11', 13' koaxial zueinander angeordnet werden, so daß Sende- und Empfangslichtbündel 28, 29 parallel zueinander verlaufen. Der Lichtsender ist hier mit 10' bezeichnet, der Lichtempfanger mit 12'.

Eine Ausführungsvariante zur Erzielung einer Koaxiallage des Sendelichtbündels und des Empfangslichtbündels zeigt Fig. 3.

Das vom Lichtsender 10'' ausgehende Sendelichtbündel 28' wird hier nach passieren der Sendeoptik 11'' mittels eines Umlenkspiegels 30 um 90° in die Richtung der optischen Achse der Empfangsoptik 13'' umgelenkt. Das Empfangslichtbündel 29' gelangt parallel zum Sendelichtbündel 28' über die Empfangsoptik 13'' zum Lichtempfänger 12''.

## Patentansprüche

1. Einen Sender (10), einen Empfänger (12) und eine Schaltungsanordnung zur Signalauswertung aufweisende Überwachungseinrichtung für das berührungslose Erfassen von im zu überwachenden Bereich befindlichen oder in diesen Bereich eindringenden Objekten, bei der Sender (10) und Empfänger (12) auf derselben Seite angeordnet sind und der zu überwachende Bereich durch eine Referenzfläche (14) begrenzt ist, wobei als Sender (10) ein Laser dient, die Soll-Laufzeit des Laserstrahls durch elektronische Messung der Phasenverschiebung zwischen dem Empfangssignal und einem Vergleichssignal ermittelt wird und dieser Phasensollwert mit den Phasenistwerten verglichen wird. dadurch gekennzeichnet, daß die von der Referenzfläche (14) reflektierten und auf den Empfänger treffenden Sendesignale über einen Analog-Digitalwandler (23) einem Mikrocontroller (25) zugeführt werden, der die Distanz der Referenzfläche vom Sender (10) / Empfänger (12) einschließlich einer oberen und unteren Distanzwert-Toleranzgrenze berechnet, daß im Microcontroller (25) für den Pegel der momentanen Empfangssignale eine ohere und untere Toleranzgrenze berechnet wird, daß im Microcontroller (25) der Pegel und der Distanzwert der von der Referenzfläche (14) reflektierten Sendesignale, welche die Sollwerte bilden, mit dem Pegel und dem Distanzwert der momentanen Empfangssignale. welche die Istwerte bilden, zyklisch verglichen werden, und daß zur Meldung eines im Überwachungsbereich befindlichen Objekt ein Warn und/oder Abschaltvorgang ausgelöst wird, falls ein Istwert außerhalb der Toleranzgrenzen des zugehörigen Sollwerts liegt.

2. Überwachungseinrichtung nach Anspruch 1, dadurch gekennzeichnet, daß das Licht des Lichtsenders 10 über einen von einem Oszillator (17) gespeisten Modulator (16) in seiner Intensität moduliert ist, die Spannung des Ozsillators (17) über einen Impulsformer (18) einem Phasendetektor (19) als getaktetes Vergleichssignal Uₛ zugeführt wird und an den zweiten Spannungseingang des Phasendetektors (19) die mittels eines weiteren Impulsformers (21) in Rechteckimpulse umgeformten Empfangssignale als Eingangsspannung Uₑ gelegt sind.

3. Überwachungseinrichtung nach Anspruch 2, dadurch gekennzeichnet, daß die Frequenz der über den Oszillator (17) und den Impulsformer (18) dem Phasendetektor (19) zugeführten rechteckförmigen Spannungsimpulse Uₛ kleiner gleich 10 MHz ist.

4. Überwachungseinrichtung nach einem der vorhergehenden Ansprüche, dadurch gekennzeichnet, daß die Leistung des Lichtsenders 10 abhängig von der Amplitude des Sollempfangssignals geregelt wird.

5. Überwachungseinrichtung nach Anspruch 4, dadurch gekennzeichnet, daß nach Erreichen einer definierten Grenzleistung des Lichtsenders (10) eine Warnsignalabgabe erfolgt.

6. Überwachungseinrichtung nach einem der vorhergehenden Ansprüche, dadurch gekennzeichnet, daß Sende- und Empfangsoptik (11, 13') koaxial zueinander angeordnet sind.

7. Überwachungseinrichtung nach einem der Ansprüche 1 bis 5, dadurch gekennzeichnet, daß das Sendelichtbündel (28') mittels eines Umlenkspiegels (30) in die Richtung der optischen Achse der Empfangsoptik (13") umgelenkt wird.

## Claims

1. Surveillance equipment comprising a transmitter (10), a receiver (12) and a circuit arrangement for signal evaluation and being for the contactless detection of objects in the region to be surveyed or penetrating into this region, in which equipment the transmitter (10) and the receiver (12) are arranged on the same side and the region to be surveyed is bounded by a reference surface (14), wherein a laser serves as the transmitter (10), the target transit time of the laser beam is ascertained by electronic measurement of the phase shift between the received signal and a comparison signal and this target phase value is compared with the actual phase values, characterised thereby, that the transmitted signals reflected by the reference surface (14) and impinging on the receiver (12) are fed by way of an analog-to-digital converter (23) to a microcontroller (25), which computes the distance of the reference surface from the transmitter (10) and the receiver (12) inclusive of an upper and a lower distance value tolerance limit, that an upper and a lower tolerance limit is computed in the microcontroller (25) for the level of the instantaneous received signals, that the level and the distance value of the transmitted signals, which are reflected by the reference surface (14) and form the target values, are compared cyclically in the microcontroller (25) with the level and the distance value of the instantaneous received signals, which form the actual values, and that a warning and/or switching-off operation is triggered for reporting an object present in the surveillance region in the case of an actual value lying outside the tolerance limits of the associated target value.

2. Surveillance equipment according to claim 1, characterised thereby, that the light of the light emitter (10) is modulated in its intensity by way of a modulator (16) fed by an oscillator (17), the voltage of the oscillator (17) is fed by way of a pulse shaper (18) as keyed comparison signal Uₛ to a phase detector (19) and the received signals, which are reshaped into rectangular pulses by means of a further pulse shaper (21), are applied as input voltage Uₑ to the second input of the phase detector (19).

3. Surveillance equipment according to claim 2, characterised thereby, that the frequency of the rectangular voltage pulses Uₛ fed by way of the oscillator (17) and the pulse shaper (18) to the phase detector (19) is at most equal to 10 megahertz.

4. Surveillance equipment according to one of the preceding claims, characterised thereby, that the power of the light emitter (10) is regulated in dependence on the amplitude of the target received signal.

5. Surveillance equipment according to claim 4, characterised thereby, that a warning signal delivery takes place after reaching a defined limit power of the light emitter (18).

6. Surveillance equipment according to one of the preceding claims, characterised thereby, that the optical transmitting and receiving systems (11, 13') are each arranged co-axially with the other.

7. Surveillance equipment according to one of the claims 1 to 5, characterised thereby, that the transmitted light beam (28') is deflected by means of a deflecting mirror (30) into the direction of the optical axis of the optical receiving system (13").

## Revendications

1. Dispositif de surveillance comprenant un émetteur (10), un récepteur (12) et un agencement de circuits d'exploitation des signaux et destiné à détecter sans contact des objets qui sont situés dans la zone qu'il doit surveiller ou qui pénètrent dans cette zone, dans lequel l'émetteur (10) et le récepteur (12) sont disposés du même côté et la zone à surveiller est limitée par une surface de référence (14), cependant que l'on utilise un laser comme émetteur (10), que le temps de parcours de consigne du rayon laser est déterminé par une mesure électronique du déphasage entre le signal reçu et un signal de comparaison, et que cette valeur de consigne du déphasage est comparée à des valeurs réelles du déphasage, caractérisé par le fait que les signaux émis qui sont réfléchis par la surface de référence (14) et qui arrivent sur le récepteur sont amenés par l'intermédiaire d'un convertisseur analogique-numérique (23) à un microprocesseur (25) qui calcule la distance entre la surface de référence et l'émetteur (10) ou le récepteur (12), y compris une zone de tolérance supérieure et inférieure pour la valeur de la distance, par le fait qu'une limite de tolérance supérieure et inférieure est calculée dans le microprocesseur (25) pour le niveau des signaux reçus instantanés, par le fait que le niveau et la valeur de la distance des signaux émis qui sont réfléchis par la surface de référence (14) et qui forment les valeurs de consigne sont comparés cycliquement dans le microprocesseur (25) au niveau et à la valeur de la distance des signaux reçus instantanés qui forment les valeurs réelles, et par le fait qu'en vue d'annoncer la présence d'un objet dans la zone de surveillance, une alarme et/ou une opération de mise hors circuit est déclenchée dans le cas où une valeur réelle est située à l'extérieur des limites de tolérance de la valeur de consigne associée.

2. Dispositif de surveillance selon la revendication 1, caractérisé par le fait que la lumière de l'émetteur de lumière (10) est modulée en intensité par l'intermédiaire d'un modulateur (16) alimenté par un oscillateur (17), que la tension de l'oscillateur (17) est amenée par l'intermédiaire d'un circuit de mise en forme des impulsions (18) à un comparateur de phase (19) sous la forme d'un signal de comparaison synchronisé Uₛ, et que les signaux reçus transformés en impulsions rectangulaires au moyen d'un autre circuit de mise en forme des impulsions (21) sont appliqués à la deuxième entrée des tensions du comparateur de phase (19) sous la forme d'une tension d'entrée Uₑ.

3. Dispositif de surveillance selon la revendication 2, caractérisé par le fait que la fréquence des impulsions rectangulaires de tension Uₛ qui sont amenées au comparateur de phase (19) par l'intermédiaire de l'oscillateur (17) et du circuit de mise en forme des impulsions (18) est inférieure ou égale à 10 MHz.

4. Dispositif de surveillance selon l'une des revendications précédentes, caractérisé par le fait que la puissance de l'émetteur de lumière (10) est régulée en fonction de l'amplitude du signal de réception de consigne.

5. Dispositif de surveillance selon la revendication 4, caractérisé par le fait qu'une émission d'un signal d'alarme a lieu après qu'une puissance limite bien définie de l'émetteur de lumière (10) a été atteinte.

6. Dispositif de surveillance selon l'une des revendications précédentes, caractérisé par le fait que les optiques d'émission et de réception (11', 13') sont disposées d'une manière coaxiale l'une par rapport à l'autre.

7. Dispositif de surveillance selon l'une des revendications 1 à 5, caractérisé par le fait que le faisceau lumineux émis (28') est dévié au moyen d'un miroir de déviation (30) dans la direction de l'axe optique de l'optique de réception (13").
